# EUROPEAN PATENT SPECIFICATION

(11) **EP 2 786 876 B1**
(45) Date of publication and mention of the grant of the patent: **17.10.2018**
(21) Application number: 12853269.4
(22) Date of filing: 29.11.2012
(51) Int. Cl.: B41M 3/12, B41M 5/40, B32B 23/08, B44C 1/17, B05D 3/06, B05D 1/30, B29C 45/14

(54) **TRANSFER FILM FOR IN-MOLD INJECTION SHOWING THREE-DIMENSIONAL PATTERN, AND PREPARATION METHOD THEREOF**
TRANSFERFOLIE ZUM GIESSEN IN EINE FORM MIT DREIDIMENSIONALEM MUSTER UND HERSTELLUNGSVERFAHREN DAFÜR
FILM DE TRANSFERT POUR INJECTION DANS UN MOULE PRÉSENTANT UN MOTIF EN TROIS DIMENSIONS, ET SON PROCÉDÉ DE PRÉPARATION

(30) Priority: 02.12.2011 KR 20110128113
(43) Date of publication of application: 08.10.2014
(73) Proprietor: LG Hausys, Ltd., Seoul 150-721 (KR)
(72) Inventor: LEE, Myung-Jin, Busan 614-760 (KR); HWANG, Jae-Bong, Busan 612-878 (KR)
(74) Representative: Zacco Sweden AB
(86) International application number: PCT/KR2012/010215
(87) International publication number: WO 2013/081384

(56) References cited:
- DE-A1- 2 649 479
- KR-A- 19980 043 162
- KR-A- 20080 076 070
- KR-A- 20110 019 899
- KR-A- 20110 069 462
- US-A1- 2010 182 699
- US-A1- 2011 159 255

## Description

### [Technical Field]

The present invention relates to a transfer film for in-mold injection molding and a method for preparing the same. More particularly, the present invention relates to a transfer film for in-mold injection molding, in which a UV curable layer includes a three-dimensional pattern and a release agent composition.

### [Background Art]

A transfer film for in-mold injection molding is a laminate film including a plurality of layers each of which has unique properties, and includes a metal-deposited layer or a printed layer including various printed patterns in order to express a metallic texture or a pattern. However, although the laminate film including the metal-deposited layer and the printed layer can simply exhibit a metallic texture or express a two-dimensional pattern, the laminate film cannot express a three-dimensional pattern and cannot show hologram effects or optical gradation effects allowing different colors or patterns to be shown depending on viewing angle.

Korean Patent Laid-open Publication No. 2010-0048181 discloses only that a UV curable layer can be formed by curing a composition including a UV curable resin, a photostabilizer and an initiator through UV irradiation, and does not disclose the presence of an embossed pattern. Thus, for exterior designs, there is an increasing need for an in-mold transfer film capable of expressing a three-dimensional pattern, hologram effects and optical gradation effects.

Korean Patent Laid-open Publication No. 2008-0076070 discloses a plastic film for lamination having a three-dimensional embossing effect. The film is to be adhered to building walls or the like by use of an adhesive.

### [Disclosure]

### [Technical Problem]

It is an aspect of the present invention to provide a three-dimensional pattern through injection molding by forming the three-dimensional pattern on an upper side of a UV curable layer including a release agent composition, followed by curing using a UV lamp.

### [Technical Solution]

In accordance with one aspect of the present invention, a transfer film for in-mold injection molding includes a substrate, a UV curable layer, a hard coating layer, a printed layer, and an adhesive layer, wherein the UV curable layer includes a three-dimensional pattern and a release agent composition.

In accordance with another aspect of the present invention, a method for preparing a transfer film for in-mold injection molding includes: forming a substrate; forming a UV curable layer including a release agent composition on an upper side of the substrate; forming a three-dimensional pattern on an upper side of the UV curable layer, followed by curing using a UV lamp; forming a hard coating layer on an upper side of the UV curable layer including a release agent composition; forming a printed layer on an upper side of the hard coating layer; and forming an adhesive layer on an upper side of the printed layer.

### [Advantageous Effects]

According to the present invention, since the transfer film for in-mold injection molding includes a UV curable layer including a release agent composition without a release layer, the transfer film can provide various effects for exterior designs, such as expression of a three-dimensional pattern, hologram, and optical gradation, as well as surface reinforcement of an injection-molded article and shielding of electromagnetic waves. In particular, the transfer film can realize these effects on a curved surface of an injection-molded article.

In addition, in the method according to the invention, since the three-dimensional pattern is formed on an upper side of the UV curable layer including the release agent composition, followed by UV curing, various and clear three-dimensional patterns can be realized on an in-mold injection-molded article.

### [Description of Drawings]

Fig. 1 is a sectional view of a transfer film for in-mold injection molding according to one embodiment of the present invention.
Fig. 2 is a flowchart of a method for preparing a transfer film for in-mold injection molding according to one embodiment of the present invention.

### [Best Mode]

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the present invention by those skilled in the art. The scope of the present invention is defined only by the claims. Like components will be denoted by like reference numerals throughout the specification.

Hereinafter, a transfer film for in-mold injection molding capable of realizing a three-dimensional texture of various patterns, and a method for preparing the transfer film according to embodiments of the present invention will be described in detail with reference to the accompanying drawings.

### Transfer film for in-mold injection molding

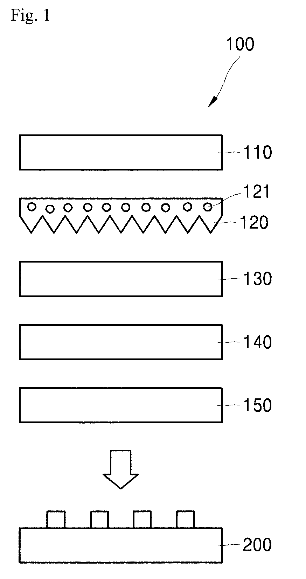

Fig. 1 is a sectional view of a structure of a transfer film for in-mold injection molding according to embodiments of the present invention.

Referring to Fig. 1, a transfer film 100 for in-mold injection molding according to one embodiment of the invention includes a substrate 110, a UV curable layer 120, a hard coating layer 130, a printed layer 140, and an adhesive layer 150.

The substrate 110 may include at least one selected from among polyethylene terephthalate (PET), polycarbonate (PC), polypropylene (PP), polyethylene terephthalate glycol (PETG), and acrylics. Since PET or PETG exhibits better heating elongation than a general substrate material, PET or PETG can maximize formability and thus is preferably used for the substrate.

The UV curable layer 120 includes a three-dimensional pattern and a release agent composition 121. Here, the UV curable layer 120 may have a thickness of 3 µm to 20 µm. If the UV curable layer 120 has a thickness of less than 3 µm, it can be difficult to realize a three-dimensional texture on the printed layer 140 formed on the hard coating layer 130, and the UV curable layer of an injection-molded article can suffer from cracking due to thin thickness of the UV curable layer. Conversely, if the UV curable layer 120 has a thickness of greater than 20 µm, cracking occurs upon injection molding due to change over time caused by non-curing of the UV curable layer 120, thereby causing non-peeling.

In addition, the UV curable layer 120 may include a composition including a UV curable resin, a photoinitiator, and an additive. The UV curable resin may include silicone acrylate, urethane acrylate, epoxy acrylate, polyester acrylate oligomers, and the like, which allows easy control of properties and exhibit general index of refraction for universal purposes.

Examples of the photoinitiator may include at least one selected from the group consisting of benzoin methyl ether, 2,4,6-trimethylbenzoyl diphenylphosphine oxide, bis(2,4,6-trimethylbenzoyl) phenylphosphine oxide, α,α-methoxy-α-hydroxyacetophenone, 2-benzoyl-2-(dimethylamino)-1-[4-(4-morphonyl)phenyl]-1-butanone, and 2,2-dimethoxy-2-phenylacetophenone. The photoinitiator may be present in an amount of 0.01 parts by weight to 5 parts by weight based on 100 parts by weight of the UV curable resin. If the photoinitiator is present in an amount of less than 0.01 parts by weight, the composition cannot be sufficiently cross-linked and cannot achieve improvement in cohesion. In addition, if the photoinitiator is present in an amount of greater than 5 parts by weight, the composition can suffer from significant deterioration in initial tack and adhesion.

Other additives which can be added to the composition in addition to the photoinitiator may include porous fillers, coupling agents, antistatic agents, surfactants, tackifiers, processing oil, and the like. In addition, the additive may be selected from typical additives used in the art and be added in a suitable amount satisfying the object of the invention.

The release agent composition 121 included in the UV curable layer 120 may include at least one selected from among epoxy, epoxy-melamine, amino alkyd, acrylic, melamine, silicone, fluorine, cellulose, urea resin, polyolefin, and paraffin compounds.

Preferably, the release agent composition 121 includes a silicone compound exhibiting most suitable release capabilities. Since the melamine, paraffin wax or fluorine compound has high release capabilities, the melamine, paraffin wax or fluorine compound can cause problems, such as formation of a non-uniform coating layer and the like, by allowing the semi-cured hard coating layer 130 to be partially transferred to a lower surface of the substrate 110 upon winding of the hard coating layer 130.

The silicone compound may include a silicone acrylate compound. The silicone acrylate compound may serve as the release agent composition due to low surface energy and excellent viscosity retention capabilities thereof. As a result, according to the invention, since the UV curable layer including the silicone acrylate compound acts like a release layer, the UV curable layer does not cause surface damage or contamination when removed, and can exhibit excellent adhesion when attached. In addition, advantageously, the silicone acrylate compound can minimize cracks on an outer appearance of an in-mold transfer film upon injection molding of the in-mold transfer film and is mixed well upon preparation of the release agent composition.

In addition, the release agent composition includes 5 wt% to 15 wt% of a silicone acrylate oligomer. If the amount of the silicone acrylate oligomer is less than 5 wt%, there can be a problem of cracking upon injection molding of the in-mold transfer film and the composition can have too low viscosity as the amount of the silicone acrylate oligomer is reduced. Further, if the amount of the silicone acrylate oligomer exceeds 15 wt%, a non-uniform in-mold transfer film can be formed upon injection-molding due to high viscosity of the composition. Furthermore, the UV curable layer can be stuck to a roll and a transferred product instead of being transferred to the substrate due to reduced adhesion to the substrate.

The UV curable layer 120 includes a three-dimensional pattern formed thereon, and the three-dimensional pattern may have a thickness of 3 µm to 20 µm. That is, if the three-dimensional pattern has a thickness of less than 3 µm, the three-dimensional pattern cannot provide sufficient three-dimensional effects, and cannot secure coupling effects with the printed layer formed after formation of the three-dimensional pattern. In addition, if the three-dimensional pattern has a thickness of greater than 20 µm, the overall transfer film for in-mold injection molding has increased thickness and deteriorated formability, thereby making it difficult to normally perform a transfer process for in-mold injection molding. Further, the UV curable layer may suffer from cracking on an outer appearance thereof upon injection molding of the in-mold transfer film.

The three-dimensional pattern may include a hairline pattern, and an embossed or engraved pattern. In addition, the hairline pattern may be formed to a thickness of 1 µm to 3 µm, and the embossed or engraved pattern may be formed to a thickness of 3 µm to 20 µm. If the three-dimensional pattern includes the hairline pattern having a thickness out of this range, the UV curable layer can suffer from cracking due to insufficient elongation thereof after injection molding, and if the three-dimensional pattern includes the embossed or engraved pattern having a thickness out of the above range, the UV curable layer can suffer from cracking due to high viscosity and thick thickness thereof.

The hard coating layer 130 is formed to prevent scratches on the printed layer, which will be described below, upon injection molding. The hard coating layer 130 may include at least one of acrylic, urethane, epoxy compounds, and siloxane polymers. In addition, the hard coating layer 130 may include a UV curable resin such as oligomers. Further, the hard coating layer 130 may further include a silica filler to improve strength.

Here, the hard coating layer 130 may have a thickness of 1 µm to 3 µm. If the hard coating layer 130 has a thickness of less than 1 µm, there can be insignificant effects in prevention of scratches. Conversely, if the hard coating layer 130 has a thickness of greater than 3 µm, there can be a problem of poor injection molding due to cracking caused by low elongation of the film upon injection molding and powder caused by brittleness of the film.

The printed layer 140 may be formed by one of gravure printing and flexographic printing. The printed layer 140 has the same or different patterns, and may realize portraits, various colors, various patterns and the like in a desired shape without limitation.

A primer layer (not shown) is interposed between the printed layer 140 and the adhesive layer 150 described below, and improves adhesion of the adhesive layer 150. The primer layer (not shown) may include a urethane resin or a modified acrylic resin as a primary component, or include polyisocyanate and polyol as the primary component. More specifically, the primer layer may include at least one selected from among polyester polyol, polyisocyanate, modified acryl, metal oxide particles, and curing catalysts.

The adhesive layer 150 may be formed by coating an adhesive, such as polyester, polyurethane, acrylic, ethylene co-vinyl acetate (EVA), polyvinyl acetate (PVA) adhesives, and the like, to an appropriate thickness using at least one selected from among gravure printing, flexographic printing, micro gravure coating, comma coating, and roll coating, followed by curing at a certain temperature.

### Method for preparing transfer film for in-mold injection molding

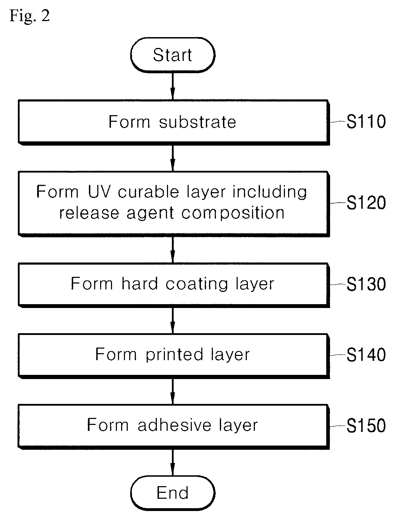

Fig. 2 is a flowchart of a method for preparing a transfer film for in-mold injection molding according to one embodiment of the present invention.

Referring to Fig. 2, a method for preparing a transfer film for in-mold injection molding according to one embodiment of the invention includes: forming a substrate (S110); forming a UV curable layer including a release agent composition on an upper side of the substrate (S120); forming a hard coating layer on an upper side of the UV curable layer (S130); forming a printed layer on an upper side of the hard coating layer (S140); and forming an adhesive layer on an upper side of the printed layer (S150).

Operation S120 of forming a UV curable layer including a release agent composition includes forming a three-dimensional pattern on the upper side of the UV curable layer, followed by curing using a UV lamp.

In addition, the three-dimensional pattern is formed on the upper side of the UV curable layer by gravure coating. In gravure coating, since a coating target and a gravure roll are moved in opposite directions, the coating target is coated with a coating liquid on the gravure roll while the coating target is not significantly bent by the gravure roll without pressing the coating target at an opposite side to the gravure roll using a separate rubber roll or the like. Since gravure coating allows easy adjustment of the amount of the coating liquid and uniform coating without wrinkling, gravure coating is broadly used in the art.

Curing may be performed using a UV lamp, and the UV lamp may be selected from among metal halide, mercury vapor, and black light lamps, without being limited thereto. In particular, curing is preferably performed using the metal halide UV lamp, which allows rapid curing.

In addition, curing may be performed at a lamp power of 300 mJ to 500 mJ and at a curing rate of 3 m/min to 8 m/min using the metal halide lamp. If the lamp power is not within this range, there can be deterioration in productivity, and the UV curable layer can suffer from cracking due to hardness thereof. Further, if the curing rate is less than 3 m/min, there can be deterioration in productivity, and the UV curable layer can suffer from cracking. If the curing rate is greater than 8 m/min, there is a concern of defective products due to insufficient curing of the UV curable layer upon formation thereof.

Referring to Fig. 2, in operation S130 of forming a hard coating layer, a hard coating material layer (not shown) is formed by coating a hard coating material onto the upper side of the UV curable layer 120 to a thickness of 1 µm to 3 µm, followed by curing at a temperature from 140°C to 170°C in a drying furnace, thereby forming the hard coating layer 130.

In operation S140 of forming a printed layer, the printed layer 140 is formed on the upper side of the hard coating layer 130 by one of gravure printing and flexographic printing. The printed layer 140 has the same or different patterns, and may realize portraits, various colors, various patterns and the like in a desired shape without limitation.

In forming a primer layer (not shown), the primer layer (not shown) is formed on an upper side of the hard coating layer 130 and the printed layer 140 by deposition or coating. The primer layer (not shown) may include a urethane resin or a modified acrylic resin as a primary component, or include polyisocyanate and polyol as the primary component. More specifically, the primer layer may include at least one selected from among polyester polyol, polyisocyanate, modified acryl, metal oxide particles, and curing catalysts.

In operation S150 of forming an adhesive layer, the adhesive layer 150 is formed to a thickness of 1 µm to 3 µm on an upper side of the primer layer (not shown) by at least one selected from among gravure printing, flexographic printing, micro gravure coating, and roll coating. The adhesive layer 150 may include an adhesive such as polyester, polyurethane, acrylic, ethylene co-vinyl acetate (EVA), polyvinyl acetate (PVA) adhesives, and the like.

According to the invention, the transfer film for in-mold injection molding, which can realize a three-dimensional texture of various patterns without a release layer, can be prepared.

As described above, in the transfer film for in-mold injection molding prepared by the method for preparing a transfer film according to the embodiment of the invention, since the UV curable layer includes the release agent composition and the three-dimensional pattern, the release layer is not separately prepared. As a result, manufacturing costs are reduced and it is easy to realize various three-dimensional patterns. In addition, printed patterns of the printed layer formed on the upper side of the hard coating layer provide three-dimensional effects even without design change of a vacuum mold.

### 1. Preparation of in-mold transfer sheet

### Example

A UV curable layer including 50 wt% of urethane acrylate, 5 wt% of a photoinitiator (benzoin methyl ether), 35 wt% of an additive (sodium laureth sulfate) and 10 wt% of a silicone acrylate oligomer was formed to a thickness of 5 µm on an upper side of a 50 µm thick PET film, and a three-dimensional pattern having a thickness of 5 µm was formed on an upper side of the UV curable layer by micro gravure coating. Next, the UV curable layer was cured using a metal halide UV lamp (lamp power of 400 mJ, curing rate of 5 m/min).

Next, a hard coating layer was formed and a modified acrylic polyol deposition primer composition was coated onto an upper side of the hard coating layer to a thickness of 1 µm, followed by curing at 120°C for 20 seconds, thereby forming a deposition primer layer.

Next, a 3 µm thick printed layer was formed on an upper side of the deposition primer layer using gravure coating, followed by forming an 8 nm thick deposited layer on an upper side of the printed layer using vacuum deposition of aluminum. Next, the modified acrylic polyol deposition primer composition was coated to a thickness of 1 µm, followed by curing at 80°C for 20 seconds, thereby forming a primer layer.

Next, a 1.5 µm thick adhesive layer was formed, thereby preparing an in-mold transfer film.

### Comparative Example 1

A 20 µm thick UV curable layer including 50 wt% of urethane acrylate, 5 wt% of benzoin methyl ether, 35 wt% of sodium laureth sulfate and 3 wt% of a silicone acrylate oligomer was formed on an upper side of a 50 µm thick PET film, followed by forming a 5 µm thick three-dimensional pattern on an upper side of the UV curable layer using micro gravure coating. Next, the UV curable layer was cured using a metal halide UV lamp (lamp power of 400 mJ, curing rate of 5 m/min).

Next, a hard coating layer was formed and a modified acrylic polyol deposition primer composition was coated to a thickness of 1 µm onto an upper side of the hard coating layer, followed by curing at 120°C for 20 seconds, thereby forming a deposition primer layer.

Next, a 3 µm thick printed layer was formed on an upper side of the deposition primer layer using gravure coating, followed by forming an 8 nm thick deposited layer on an upper side of the printed layer using vacuum deposition of aluminum. Next, the modified acrylic polyol deposition primer composition was coated to a thickness of 1 µm, followed by curing at 80°C for 20 seconds, thereby forming a primer layer.

Next, a 1.5 µm thick adhesive layer was formed, thereby preparing an in-mold transfer film.

### Comparative Example 2

An in-mold transfer film was prepared in the same manner as in Example except that the UV curable layer including 20 wt% of the silicone acrylate oligomer was formed.

### 2. Evaluation of properties

### (1) Peeling properties

Peeling properties of the in-mold transfer films of Example and Comparative Examples 1 to 2 were evaluated by a cross-cut method before application of the films to an injection-molded product.

### (2) Retention of three-dimensional texture

Each of the in-mold transfer films of Example and Comparative Examples 1 to 2 was applied to an injection-molded product, that is, the film was applied to the injection-molded product and subjected to injection molding, followed by cross-sectional cutting, and then evaluated as to retention of a three-dimensional texture using an Ericksen tester through tomographic measurement and distinctness of image (DOI).

### (3) Formability

Each of the in-mold transfer films of Example and Comparative Examples 1 to 2 was applied to an injection-molded product, that is, the film was applied to the injection-molded product and subjected to injection molding, followed by observing whether cracks were generated (deep drawing portions) with the naked eye, that is, observing cracks of the deep drawing portions of 2R to 10R with the naked eye, thereby evaluating formability of the film.

Table 1 shows evaluation of the in-mold transfer films according to Example and Comparative Examples 1 to 2. Here, in Table 1, ratings are as follows: O: Excellent; Δ: Good; X: Poor; and XX: Extremely Poor.

**[Table 1]**

| Item | Retention of three-dimensional texture | Peeling properties | Formability |
|---|---|---|---|
| Example | ○ | Δ | ○ |
| Comparative Example 1 | Δ | X | X |
| Comparative Example 2 | X | X | XX |

Referring to Table 1, it can be seen that the transfer film of Example exhibited good peeling properties, and excellent formability and retention of a three-dimensional texture.

Conversely, although the transfer film of Comparative Example 1 exhibited moderate retention of a three-dimensional texture, since the silicone acrylate oligomer used as the release agent composition was present in an amount of 5 wt% or less, the transfer film of Comparative Example 1 exhibited poor peeling properties. In addition, it could be seen that the transfer film had a problem related to cracks with regard to formability.

The transfer film of Comparative Example 2, which included a relative excess of the silicone acrylate oligomer, suffered from non-peeling due to reduction in peeling properties, and exhibited extremely low formability due to cracks. As such, it could be seen that, as the transfer film included more amount of the silicone acrylate oligomer, the transfer film exhibited higher viscosity and thus lower productivity, and exhibited lower adhesion to the substrate since the film was not transferred thereto.

From the experimental results, it could be confirmed that, when the UV curable layer including the release agent composition within a certain range was formed, the transfer film maintained moderate or higher peeling properties and exhibited good three-dimensional effects even without a separate release layer.

Although the present invention has been described with reference to some embodiments in conjunction with the accompanying drawings, it should be understood that various modifications, changes, alterations, and equivalent embodiments can be made by those skilled in the art without departing from the scope of the invention. Therefore, the scope of the invention is limited only by the accompanying claims.

## Claims

1. A transfer film for in-mold injection molding, comprising: a substrate, a UV curable layer formed on an upper side of the substrate, a hard coating layer formed on an upper side of the UV curable layer, a printed layer formed on an upper side of the hard coating layer, and an adhesive layer formed on the upper side of the printed layer,
wherein
the substrate includes at least one selected from among polyethylene terephthalate (PET), polycarbonate (PC), polypropylene (PP), polyethylene terephthalate glycol (PETG) and acrylics, and
the hard coating includes at least one of urethane, epoxy compounds, and siloxane polymers; **characterised in that**
the UV curable layer comprises a three-dimensional pattern and a release agent composition.

2. The transfer film according to claim 1, wherein the release agent composition comprises at least one selected from among epoxy, epoxy-melamine, amino alkyd, acrylic, melamine, silicone, fluorine, cellulose, urea resin, polyolefin, and paraffin compounds.

3. The transfer film according to claim 1, wherein the release agent composition comprises 5 wt% to 15 wt% of a silicone acrylate oligomer.

4. The transfer film according to claim 1, wherein the UV curable layer has a thickness of 3 µm to 20 µm.

5. The transfer film according to claim 1, wherein the three-dimensional pattern has a thickness of 3 µm to 20 µm.

6. The transfer film according to claim 1, wherein the three-dimensional pattern comprises a hairline pattern, and an embossed or engraved pattern.

7. The transfer film according to claim 6, wherein the hairline pattern has a thickness of 1 µm to 3 µm, and the embossed or engraved pattern has a thickness of 3 µm to 20 µm.

8. A method for preparing a transfer film for in-mold injection molding, comprising:
forming a substrate;
forming a UV curable layer comprising a release agent composition on an upper side of the substrate;
forming a three-dimensional pattern on an upper side of the UV curable layer, followed by curing using a UV lamp;
forming a hard coating layer on an upper side of the UV curable layer comprising a release agent composition;
forming a printed layer on an upper side of the hard coating layer; and
forming an adhesive layer on an upper side of the printed layer,
wherein the substrate includes at least one selected from among polyethylene terephthalate (PET), polycarbonate (PC), polypropylene (PP), polyethylene terephthalate glycol (PETG) and acrylics, and
the hard coating includes at least one of urethane, epoxy compounds, and siloxane polymers.

9. The method according to claim 8, wherein the three-dimensional pattern is formed by gravure coating.

10. The method according to claim 8, wherein the UV lamp is selected from among metal halide, mercury, and black light lamps.

11. The method according to claim 10, wherein the UV lamp is a metal halide lamp, and curing is performed at a lamp power from 300 mJ to 500 mJ and at a curing rate from 3 m/min to 8 m/min.

## Patentansprüche

1. Transferfolie zum Spritzgießen in eine Form, umfassend: ein Substrat, eine auf einer oberen Seite des Substrats gebildete UV-härtende Schicht, eine auf einer oberen Seite der UV-härtenden Schicht gebildete Hartstoffbeschichtung, eine auf einer oberen Seite der Hartstoffbeschichtung gebildete bedruckte Lage und eine auf der oberen Seite der bedruckten Lage gebildete Klebschicht,
wobei das Substrat mindestens eines ausgewählt aus Polyethylenterephthalat (PET), Polycarbonat (PC), Polypropylen (PP), Polyethylenterephthalatglycol (PETG) und Acrylat umfasst, und
die Hartstoffbeschichtung mindestens eines aus Urethan, Epoxyverbindungen und Siloxanpolymeren umfasst; **dadurch gekennzeichnet, dass** die UV-härtende Schicht ein dreidimensionales Muster und eine Trennstoffzusammensetzung aufweist.

2. Transferfolie nach Anspruch 1, wobei die Trennstoffzusammensetzung mindestens eines ausgewählt aus Epoxy, Epoxy-Melamin, Aminoalkyd, Acrylat, Melamin, Silikon, Fluorin, Cellulose, Harnstoffharz, Polyolefin und Paraffinverbindungen umfasst.

3. Transferfolie nach Anspruch 1, wobei die Trennstoffzusammensetzung 5 Gew.-% bis 15 Gew.-% eines Silikonacrylatoligomers umfasst.

4. Transferfolie nach Anspruch 1, wobei die UV-härtende Schicht eine Stärke von 3 µm bis 20 µm aufweist.

5. Transferfolie nach Anspruch 1, wobei das dreidimensionale Muster eine Stärke von 3 µm bis 20 µm aufweist.

6. Transferfolie nach Anspruch 1, wobei das dreidimensionale Muster ein Haarlinienmuster und ein aufgeprägtes oder graviertes Muster umfasst.

7. Transferfolie nach Anspruch 6, wobei das Haarlinienmuster eine Stärke von 1 µm bis 3 µm aufweist, und das aufgeprägte oder gravierte Muster eine Stärke von 3 µm bis 20 µm aufweist.

8. Verfahren zur Herstellung einer Transferfolie zum Spritzgießen in eine Form, umfassend:
Bilden eines Substrats;
Bilden einer UV-härtenden Schicht umfassend eine Trennstoffzusammensetzung auf einer oberen Seite des Substrats;
Bilden eines dreidimensionalen Musters auf einer oberen Seite der UV-härtenden Schicht, danach Härten unter Verwendung einer UV-Leuchte;
Bilden einer Hartstoffbeschichtung auf einer oberen Seite der UV-härtenden Schicht umfassend eine Trennstoffzusammensetzung;
Bilden einer bedruckten Lage auf einer oberen Seite der Hartstoffbeschichtung; und
Bilden einer Klebschicht auf einer oberen Seite der bedruckten Lage,
wobei das Substrat mindestens eines ausgewählt aus Polyethylenterephthalat (PET), Polycarbonat (PC), Polypropylen (PP), Polyethylenterephthalatglycol (PETG) und Acrylat umfasst, und
die Hartstoffbeschichtung mindestens eines aus Urethan, Epoxyverbindungen und Siloxanpolymeren umfasst.

9. Verfahren nach Anspruch 8, wobei das dreidimensionale Muster durch Gravurbeschichten gebildet wird.

10. Verfahren nach Anspruch 8, wobei die UV-Leuchte aus Metallhalogenid, Quecksilber und Schwarzlichtlampen ausgewählt ist.

11. Verfahren nach Anspruch 10, wobei die UV-Lampe eine Metallhalogenid-Lampe ist, und das Härten bei einer Lampenleistung von 300 mJ bis 500 mJ und einer Härtegeschwindigkeit von 3 m/min bis 8 m/min erfolgt.

## Revendications

1. Film de transfert pour moulage par injection dans un moule, comprenant :
un substrat, une couche durcissable aux UV formée sur un côté supérieur du substrat, une couche de revêtement dur formée sur un côté supérieur de la couche durcissable aux UV, une couche imprimée formée sur un côté supérieur de la couche de revêtement dur, et une couche adhésive formée sur le côté supérieur de la couche imprimée,
dans lequel le substrat inclut au moins l'un choisi parmi polyéthylène téréphtalate (PET), polycarbonate (PC), polypropylène (PP), polyéthylène téréphtalate de glycol (PETG) et acryliques, et
le revêtement inclut au moins l'un parmi uréthane, composés époxy et polymères siloxane ; **caractérisé en ce que** la couche durcissable aux UV comprend un motif tridimensionnel et une composition d'agent de libération.

2. Film de transfert selon la revendication 1, dans lequel la composition d'agent de libération comprend au moins une composition choisie parmi les composés époxy, époxy-mélamine, amino-alkyde, acrylique, mélamine, silicone, fluor, cellulose, résine urée, polyoléfine et paraffine.

3. Film de transfert selon la revendication 1, dans lequel la composition d'agent de libération comprend 5% en poids à 15% en poids d'un oligomère d'acrylate de silicone.

4. Film de transfert selon la revendication 1, dans lequel la couche durcissable aux UV présente une épaisseur de 3 µm à 20 µm.

5. Film de transfert selon la revendication 1, dans lequel le motif tridimensionnel présente une épaisseur de 3 µm à 20 µm.

6. Film de transfert selon la revendication 1, dans lequel le motif tridimensionnel comprend un motif filiforme et un motif gaufré ou gravé.

7. Film de transfert selon la revendication 6, dans lequel le motif filiforme a une épaisseur de 1 µm à 3 µm, et le motif gaufré ou gravé a une épaisseur de 3 µm à 20 µm.

8. Procédé de préparation d'un film de transfert pour moulage par injection dans un moule, comprenant :
la formation d'un substrat ;
la formation d'une couche durcissable aux UV comprenant une composition d'agent de libération sur un côté supérieur du substrat ;
la formation d'un motif tridimensionnel sur un côté supérieur de la couche durcissable aux UV, suivie d'un durcissement en utilisant une lampe UV ;
la formation d'une couche de revêtement dur sur un côté supérieur de la couche durcissable aux UV comprenant une composition d'agent de libération ;
la formation d'une couche imprimée sur un côté supérieur de la couche de revêtement dur ; et
la formation d'une couche adhésive sur un côté supérieur de la couche imprimée,
dans lequel le substrat inclut au moins l'un choisi parmi polyéthylène téréphtalate (PET), polycarbonate (PC), polypropylène (PP), polyéthylène téréphtalate de glycol (PETG) et acryliques, et
le revêtement inclut au moins l'un parmi uréthane, composés époxy et polymères siloxane.

9. Procédé selon la revendication 8, dans lequel le motif tridimensionnel est formé par revêtement par gravure.

10. Procédé selon la revendication 8, dans lequel la lampe UV est choisie parmi les lampes aux halogénures métalliques, au mercure et à lumière noire.

11. Procédé selon la revendication 10, dans lequel la lampe UV est une lampe aux halogénures métalliques, et le durcissement est effectué à une puissance de lampe de 300 mJ à 500 mJ et à une vitesse de durcissement de 3 m / min à 8 m / min.
